# EUROPEAN PATENT APPLICATION

(11) **EP 4 474 530 A1**
(43) Date of publication of application: **11.12.2024**
(21) Application number: 23779377.3
(22) Date of filing: 09.03.2023
(51) Int. Cl.: C25B 11/093, B01J 23/89, B01J 37/02, B01J 37/025, B01J 37/08, C25B 1/04, C25B 9/00, C25B 11/052, C25B 11/061

(54) **ELECTROLYSIS ELECTRODE AND METHOD FOR PRODUCING SAME**

(30) Priority: 31.03.2022 JP 2022059464
(71) Applicant: De Nora Permelec Ltd, Fujisawa-shi, Kanagawa 252-0816 (JP)
(72) Inventor: HUANG, Meiqi, Fujisawa-shi, Kanagawa 252-0816 (JP); NAKAI, Takaaki, Fujisawa-shi, Kanagawa 252-0816 (JP); KATO, Akihiro, Fujisawa-shi, Kanagawa 252-0816 (JP); ARIMOTO, Osamu, Fujisawa-shi, Kanagawa 252-0816 (JP)
(74) Representative: Reitstötter Kinzebach
(86) International application number: PCT/JP2023/009039
(87) International publication number: WO 2023/189350

(57) **Abstract**

There is provided a method for producing an electrolysis electrode having excellent catalytic activity such as low oxygen overpotential and including a catalyst having excellent stability such as reducing loss of a catalyst component such as iridium (Ir). The method for producing an electrolysis electrode includes a step of coating a catalyst precursor composition containing an iridium component and the like on a surface of an electrically conductive substrate, a step of obtaining a primary baked product by thermal treating the electrically conductive substrate coated with the catalyst precursor composition, and a step of forming a catalyst layer containing an iridium oxide on the surface of the electrically conductive substrate by thermal treating the primary baked product, wherein the iridium component is an iridium compound containing a carboxy group, and the content of nickel (Ni) is 10 to 35% by mass, the content of cobalt (Co) is 25 to 55% by mass, and the content of iridium (Ir) is 15 to 55% by mass in the catalyst precursor composition, provided that Ni + Co + Ir = 100% by mass.

## Description

### Technical Field

The present invention relates to an electrolysis electrode and a method for producing an electrolysis electrode.

### Background Art

Hydrogen is secondary energy which is suitable for storage and transportation and has small environmental load, and therefore a hydrogen energy system using hydrogen as an energy carrier has been attracting attention. Currently, hydrogen is mainly produced by steam reforming of fossil fuel, or the like, and from the viewpoint of problems of global warming and exhaustion of fossil fuel, an importance of alkaline water electrolysis using renewable energy as a power source has become increased.

Water electrolysis is largely divided into two. One is alkaline water electrolysis, in which a high-concentration aqueous alkali solution is used for an electrolyte. The other is solid polymer electrolyte water electrolysis, in which a solid polymer electrolyte (SPE) membrane is used for an electrolyte. When large-scale hydrogen production is performed by water electrolysis, it is said that alkaline water electrolysis, in which an inexpensive material, such as an iron group metal including nickel and the like, is used, is more suitable than solid polymer electrolyte water electrolysis, in which an electrode using a large amount of an expensive noble metal is used.

With respect to the high-concentration aqueous alkali solution, electric conductivity becomes high as the temperature increases, but corrosiveness also becomes high. Therefore, the upper limit of the operation temperature is controlled to about 80 to about 90°C. The electrolysis performance has been improved to about 1.7 to about 1.9 V (efficiency 78 to 87%) at a current density of 0.3 to 0.4 Acm⁻² by the development of constituent materials and various piping materials for an electrolytic cell, which are hightemperature resistant and resistant to a high-concentration aqueous alkali solution, and the development of a lowresistivity separator and an electrode which has an enlarged surface area and has a catalyst applied thereon.

A nickel-based material which is stable in a high-concentration aqueous alkali solution is used as an alkaline water electrolysis anode, and it has been known that in the case of alkaline water electrolysis using a stable power source, a nickel-based anode has a life of several decades or longer. However, when renewable energy is used as a power source, severe conditions, such as sudden start/shutdown and abrupt load fluctuation, are frequent, and therefore deterioration in performance of the nickel-based anode has been problematic.

In the past, platinum group metals, platinum group metal oxides, valve metal oxides, iron group oxides, lanthanide group metal oxides, and the like have been utilized as a catalyst for an oxygen evolution anode (anode catalyst) which is used for alkaline water electrolysis. As other anode catalysts, alloy-based anode catalysts using nickel as a base, such as Ni-Co and Ni-Fe; nickel having an enlarged surface area; electrically conductive oxides (ceramic materials) including spinel-based anode catalysts, such as Co₃O₄ and NiCo₂O₄, and perovskite-based anode catalysts, such as LaCoO₃ and LaNiO₃; noble metal oxides; oxides composed of a lanthanide group metal and a noble metal; and the like have also been known.

As the oxygen evolution anode which is used for alkaline water electrolysis, there has been proposed, for example, an alkaline water electrolysis anode obtained by forming a catalyst layer containing a nickel-cobalt-based oxide, and an iridium oxide or a ruthenium oxide on the surface of a nickel substrate (Patent Literature 1). In addition, there has been proposed an alkaline water electrolysis anode obtained by forming a catalyst layer composed of a lithium-containing nickel oxide on the surface of a nickel substrate (Patent Literature 2). Further, there has been proposed an electrolysis electrode obtained by forming a catalyst layer containing a catalyst, such as a nickel cobalt spinel oxide or an iridium oxide, on the surface of a nickel substrate with an intermediate layer interposed therebetween (Patent Literature 3).

### Citation List

### Patent Literature

Patent Literature 1: Japanese Patent Laid-Open No. 2017-190476
Patent Literature 2: International Publication No. WO 2018/047961
Patent Literature 3: International Publication No. WO 2019/172160

### Summary of Invention

### Technical Problem

However, even in the alkaline water electrolysis anodes and the like proposed in Patent Literatures 1 to 3, it cannot be said that the oxygen overpotential is sufficiently low, so further improvement in catalytic activity has been required. In addition, the catalyst component is liable to be damaged with use due to falling off or the like, and therefore it cannot be said that such anodes exhibit catalytic activity stably over a long period of time, so there has still been room for further improvement.

The present invention has been completed in view of such problems of the conventional techniques, and an object of the present invention is to provide an electrolysis electrode having excellent catalytic activity such as low oxygen overpotential and including a catalyst having excellent stability such as reducing loss of a catalyst component such as iridium (Ir), and another object of the present invention is to provide a method for producing the electrolysis electrode.

### Solution to Problem

That is, according to the present invention, there is provided a method for producing an electrolysis electrode described below.
[1] A method for producing an electrolysis electrode, including:
   a step of directly or indirectly coating a catalyst precursor composition comprising a nickel component, a cobalt component and an iridium component on a surface of an electrically conductive substrate, at least the surface thereof being composed of nickel or a nickel base alloy;
   a step of obtaining a primary baked product by thermal treating the electrically conductive substrate coated with the catalyst precursor composition at 320 to 600°C; and
   a step of forming a catalyst layer containing a nickel cobalt spinel oxide and an iridium oxide directly or indirectly on the surface of the electrically conductive substrate by thermal treating the primary baked product at 350 to 600°C,wherein
   the iridium component is an iridium compound containing a carboxy group, and
   in the catalyst precursor composition, the content of nickel (Ni) is 10 to 35% by mass, the content of cobalt (Co) is 25 to 55% by mass, and the content of iridium (Ir) is 15 to 55% by mass, provided that Ni + Co + Ir = 100% by mass.
[2] The method for producing an electrolysis electrode according to [1], wherein a mass ratio ((Ni + Co)/Ir) of the total content of nickel (Ni) and cobalt (Co) to the content of iridium (Ir) in the catalyst precursor composition is 0.9 to 4.1.
[3] The method for producing an electrolysis electrode according to [1] or [2], wherein the iridium compound is at least any one of an iridium hydroxyacetyl chloride complex and iridium acetate.
[4] The method for producing an electrolysis electrode according to any one of [1] to [3], further including a step of bringing the primary baked product into contact with an alkali component to treat the primary baked product.
   In addition, according to the present invention, there is provided an electrolysis electrode described below.
[5] An electrolysis electrode produced by the method according to any one of [1] to [4].
[6] The electrolysis electrode according to [5], wherein the electrolysis electrode is an alkaline water electrolysis electrode.

### Advantageous Effects of Invention

According to the present invention, an electrolysis electrode having excellent catalytic activity such as low oxygen overpotential and including a catalyst having excellent stability such as reducing loss of a catalyst component such as iridium (Ir), and a method for producing the electrolysis electrode can be provided.

### Brief Description of Drawings

[Figure 1] Figure 1 is a section view schematically showing an embodiment of an electrolysis electrode of the present invention.
[Figure 2] Figure 2 is a SEM image of a cross section of an electrolysis electrode produced in Example 3.
[Figure 3] Figure 3 is a SEM image of a cross section of an electrolysis electrode produced in Comparative Example 1.

### Description of Embodiments

### <Electrolysis Electrode>

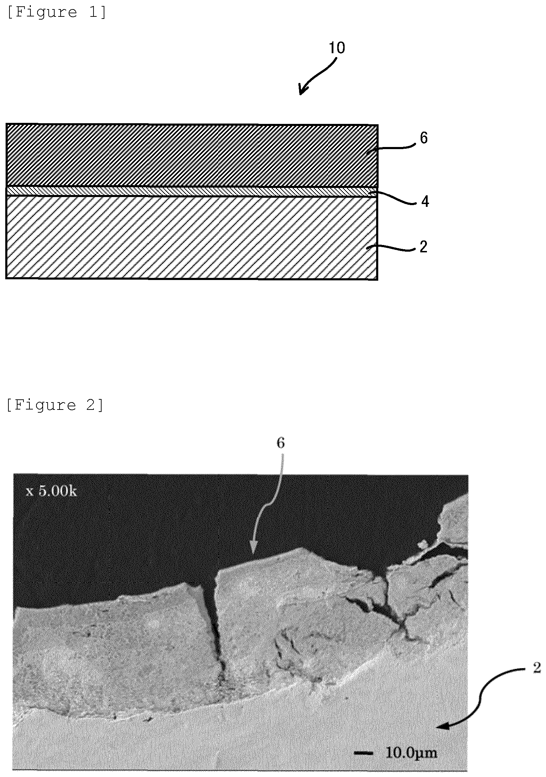

Hereinafter, embodiments of the present invention will be described, but the present invention is not limited to the following embodiments. Figure 1 is a section view schematically showing one embodiment of an electrolysis electrode of the present invention. As shown in Figure 1, an electrolysis electrode 10 of the present embodiment includes an electrically conductive substrate 2 and a catalyst layer 6 formed on a surface of the electrically conductive substrate 2. Hereinafter, details on the electrolysis electrode of the present invention will be described.

### (Electrically Conductive Substrate)

The electrically conductive substrate 2 is an electric conductor that conducts electricity for electrolysis and is an element having a function as a carrier that carries the catalyst layer 6. At least a surface of the electrically conductive substrate 2 (the surface on which the catalyst layer 6 is formed) is formed with nickel or a nickel base alloy. That is, the whole of the electrically conductive substrate 2 may be formed with nickel or a nickel base alloy, or only the surface of the electrically conductive substrate 2 may be formed with nickel or a nickel base alloy. Specifically, the electrically conductive substrate 2 may be such that a coating of nickel or a nickel base alloy is formed on the surface of a metal material, such as iron, stainless steel, aluminum, or titanium, by plating or the like.

The thickness of the electrically conductive substrate is preferably 0.05 to 5 mm. The shape of the electrically conductive substrate is preferably a shape having an opening for removing bubbles of oxygen, hydrogen, and the like to be produced. For example, an expanded mesh or a porous expanded mesh can be used as the electrically conductive substrate. When the electrically conductive substrate has a shape having an opening, the aperture ratio of the electrically conductive substrate is preferably 10 to 95%.

### (Catalyst Layer)

The catalyst layer 6 is a layer that is formed on the surface of the electrically conductive substrate 2 and has catalytic ability. As shown in Figure 1, the catalyst layer 6 may be formed on the surface of the electrically conductive substrate 2 with a nickel oxide layer 4 interposed therebetween in order to protect the electrically conductive substrate 2. Th catalyst layer 6 contains a nickel cobalt spinel oxide (NiCo₂O₄) and an iridium oxide. Therefore, the electrolysis electrode 10 of the present embodiment is useful as an alkaline water electrolysis electrode and is particularly suitable as an alkaline water electrolysis anode. The thickness, density, and the like of the catalyst layer are not particularly limited and can appropriately be set according to the application or the like of the electrode.

The types and content ratio of the metal elements in the catalyst layer 6 are substantially the same as the types and content ratio of the metal elements in the catalyst precursor composition that is used in the method for producing an electrolysis electrode, which will be described later. Therefore, in the catalyst layer, the content of nickel (Ni) is preferably 10 to 35% by mass, the content of cobalt (Co) is preferably 25 to 55% by mass, and the content of iridium (Ir) is preferably 15 to 55% by mass, provided that Ni + Co + Ir = 100% by mass. By setting the types and content ratio of the metal elements in the catalyst layer as described above, the oxygen overpotential is decreased more and the loss of the catalyst component such as iridium (Ir) can be reduced more.

The electrolysis electrode of the present embodiment is produced by a particular production method, which will be described later. It is inferred that the electrolysis electrode of the present embodiment produced by the particular production method is different from electrolysis electrodes produced by methods other than the particular production method in that the state and composition (for example, crystal state, crystal structure, and the types, compositions, and contents of trace elements) of the formed catalyst layers are different. However, it is extremely difficult or substantially impossible to check the differences by analyzing the state, composition, and the like as described above of the catalyst layers.

### <Method for Producing Electrolysis Electrode>

One embodiment of a method for producing an electrolysis electrode of the present invention includes: a step (hereinafter, also referred to as "coating step") of directly or indirectly coating a catalyst precursor composition containing a nickel component, a cobalt component, and an iridium component on a surface of an electrically conductive substrate; a step (hereinafter, also referred to as "thermal treatment step") of obtaining a primary baked product by thermal treating the electrically conductive substrate coated with the catalyst precursor composition at 320 to 600°C; and a step (hereinafter, also referred to as "post-bake step)" of forming a catalyst layer containing a nickel cobalt spinel oxide and an iridium oxide directly or indirectly on the surface of the electrically conductive substrate by thermal treating the primary baked product at 350 to 600°C . The iridium component in the catalyst precursor composition is an iridium compound containing a carboxy group. In the catalyst precursor composition, the content of nickel (Ni) is 10 to 35% by mass, the content of cobalt (Co) is 25 to 55% by mass, and the content of iridium (Ir) is 15 to 55% by mass, provided that Ni + Co + Ir = 100% by mass. Hereinafter, details on the method for producing an electrolysis electrode of the present invention will be described.

### (Pre-Treatment Step)

The electrically conductive substrate is preferably subjected to a chemical etching treatment in advance for the purpose of removing contamination particles of a metal, an organic substance, and the like on the surface before carrying out the coating step. The consumption of the electrically conductive substrate by the chemical etching treatment is preferably set to about 30 g/m² or more and about 400 g/m² or less. In addition, the surface of the electrically conductive substrate is preferably subjected to a roughening treatment in advance for the purpose of enhancing the adhesion to an intermediate layer. Examples of the roughening treatment include a blast treatment in which a powder is sprayed; an etching treatment using an acid that can dissolve the substrate; and plasma spraying.

As shown in Figure 1, the nickel oxide layer 4 may be formed on the surface of the electrically conductive substrate 2 in advance in order to protect the electrically conductive substrate 2. The nickel oxide layer 4 can be formed by, for example, baking the electrically conductive substrate 2 in the air at 450 to 550°C for 5 to 60 minutes. In addition, an intermediate layer may be formed on the electrically conductive substrate by coating a solution obtained by dissolving nickel carboxylate in a solvent, such as water, on the surface of the electrically conductive substrate and then subjecting the electrically conductive substrate coated with the solution to a thermal treatment at a temperature of 450°C or higher and 600°C or lower. When the intermediate layer is formed on the electrically conductive substrate, the catalyst layer is formed on the electrically conductive substrate with the intermediate layer interposed therebetween.

### (Coating Step)

In the coating step, the catalyst precursor composition containing a nickel component, a cobalt component, and an iridium component is coated on the surface of the electrically conductive substrate directly, or indirectly with another layer, such as the above-described intermediate layer, interposed therebetween. As the iridium component, an iridium compound containing a carboxy group is used. By using the catalyst precursor composition that contains, as the iridium component, the iridium compound containing a carboxy group and employing a so-called pyrolysis method, it is made possible to form, directly on the electrically conductive substrate, a catalyst layer that gives a lower oxygen overpotential, reduces the loss of a catalyst component such as iridium (Ir) more, and is more excellent in stability than in the case where a catalyst precursor composition containing another iridium compound, such as, for example, iridium nitrate (Ir-nitrate) as the iridium component is used, or it is made possible to form such a catalyst layer indirectly on the electrically conductive substrate with an another layer, such as an intermediate layer, interposed between the catalyst layer and the electrically conductive substrate.

Examples of the iridium compound containing a carboxy group (hereinafter, also simply referred to as "iridium compound") include an iridium hydroxyacetyl chloride complex (IrHAC), and iridium acetate (Ir-acetate). Among others, at least any one of the iridium hydroxyacetyl chloride complex and iridium acetate is preferably used as the iridium compound.

As the nickel component and the cobalt component, any of inorganic acid salts and organic acid salts that can generate a nickel ion and a cobalt ion can be used. Among others, nickel nitrate is preferably used as the nickel component, and cobalt nitrate is preferably used as the cobalt component.

The catalyst precursor composition is, for example, an aqueous solution containing a nickel component, a cobalt component, and an iridium component. In the catalyst precursor composition, the content of nickel (Ni) is 10 to 35% by mass, preferably 15 to 30% by mass. In addition, in the catalyst precursor composition, the content of cobalt (Co) is 25 to 55% by mass, preferably 30 to 55% by mass. Further, in the catalyst precursor composition, the content of iridium (Ir) is 15 to 55% by mass, preferably 20 to 55% by mass, more preferably 23 to 52% by mass, provided that Ni + Co + Ir = 100% by mass. By using the catalyst precursor composition, wherein the contents of nickel (Ni), cobalt (Co), and iridium (Ir) are within the above-described ranges, it is made possible to form a catalyst layer that gives a lower oxygen overpotential, reduces the loss of a catalyst component such as iridium (Ir), and is more excellent in stability.

In the catalyst precursor composition, the mass ratio ((Ni + Co)/Ir) of the total content of nickel (Ni) and cobalt (Co) to the content of iridium (Ir) is preferably 0.9 to 4.1, more preferably 0.9 to 3.5, particularly preferably 1.0 to 2.8. By using the catalyst precursor composition wherein the value of the "(Ni + Co)/Ir" ratio is within the above-described range, it is made possible to form a catalyst layer that gives a lower oxygen overpotential, reduces the loss of a catalyst component such as iridium (Ir), and is more excellent in stability.

As the method of coating the catalyst precursor composition on the surface of the electrically conductive substrate, known methods, such as brush coating, roller coating, spin coating, and electrostatic coating, can be utilized. Subsequently, the electrically conductive substrate coated with the catalyst precursor composition is dried as necessary. The drying temperature is preferably set to a temperature where rapid vaporization of the solvent is avoided (for example, about 60 to about 80°C).

### (Thermal Treatment Step)

In the thermal treatment step, the electrically conductive substrate coated with the catalyst precursor composition is subjected to a thermal treatment (baking) at 320 to 600°C, preferably 330 to 550°C, more preferably 340 to 520°C. By setting the thermal treatment temperature in the above-described range, it is made possible to obtain primary baked product efficiently pyrolyzing the metal components (nickel component, cobalt component, and iridium component) in the catalyst precursor composition. Note that when the thermal treatment temperature is too high, the oxidation of the electrically conductive substrate easily progresses, and the electrode resistance increases to bring about an increase in the voltage loss in some cases. The thermal treatment time may appropriately be set taking the reaction rate, the productivity, the oxidation resistance at the surface of the catalyst layer to be formed, and the like into consideration.

By appropriately setting the number of times of coating of the catalyst precursor composition in the above-described coating step, the thickness of the catalyst layer to be formed can be controlled. Note that the coating and drying of the catalyst precursor composition may be repeated for every layer until the uppermost layer is formed, and thereafter the thermal treatment may be performed on the whole layers, or the coating of the catalyst precursor composition and the thermal treatment may be repeated for every layer until the uppermost layer is formed, and thereafter the thermal treatment may be performed on the whole layers.

### (Alkali Treatment Step)

The method for producing an electrolysis electrode of the present embodiment preferably further includes a step (alkali treatment step) of bringing the primary baked product obtained in the above-described thermal treatment step into contact with an alkali component to treat the primary baked product. By bringing the primary baked product into contact with the alkali component to treat the primary baked product, impurities and the like produced by the thermal treatment can effectively be removed, and it is made possible to form a catalyst layer that gives a lower oxygen overpotential and is more excellent in stability. When the catalyst precursor composition containing an iridium hydroxyacetyl chloride complex (IrHAC) as the iridium component is used, an acid component produced from IrHAC is left in the primary baked product in some cases. Therefore, it is preferable to bring the primary baked product into contact with the alkali component to treat the primary baked product because the produced acid component can effectively be removed and it is made possible to form a catalyst layer that gives a lower oxygen overpotential and is more excellent in stability.

Specific examples of the method for bringing the primary baked product into contact with the alkali component to treat the primary calcified product includes a method of immersing the primary baked product in an aqueous solution of the alkali component. As the alkali component, alkali metal hydroxides, such as sodium hydroxide (NaOH) and potassium hydroxide (KOH), and the like can be used. The concentration of the alkali component in the aqueous solution of the alkali component may appropriately be set within a range of, for example, 4 to 8% by mass. The temperature of the aqueous solution of the alkali component may appropriately be set within a range of, for example, 20 to 40°C. In addition, the time for immersing the primary baked product in the aqueous solution of the alkali component may appropriately be set within a range of, for example, 1 to 5 hours. The primary baked product is preferably rinsed and dried after the primary baked product is immersed in the aqueous solution of the alkali component.

### (Post-Bake Step)

In the post-bake step, the primary baked product is subjected to a thermal treatment at 350 to 600°C, preferably 380 to 580°C, more preferably 400 to 560°C. The primary baked product is left standing to cool and then subjected to a thermal treatment (post-bake) again under a predetermined temperature condition, thereby the catalyst layer containing a nickel cobalt spinel oxide and an iridium oxide can be formed on the surface of the electrically conductive substrate, and thus the intended electrolysis electrode can be obtained. Note that if this post-bake is not carried out (if the primary baked product as produced is used as an electrolysis electrode), iridium is likely to be lost from the catalyst layer due to repeats of electrolysis, so that a catalyst layer excellent in stability cannot be formed.

### <Electrolytic Cell>

The electrolysis electrode of the present embodiment can be used as, for example, not only an electrolysis anode but also an electrolysis cathode. Further, the electrolysis electrode of the present embodiment can also be used as an alkaline water electrolysis anode as well as an alkaline water electrolysis cathode. That is, the use of the electrolysis electrode of the present embodiment makes it possible to form an electrolytic cell, such as an alkaline water electrolysis cell. Hereinafter, the constituent materials other than the anode in the case where the electrolysis electrode of the present embodiment is used as an alkaline water electrolysis anode to form an alkaline water electrolysis cell.

As the cathode, a substrate made of a material that is bearable to alkaline water electrolysis and a catalyst having a small cathode overpotential are preferably selected and used. As the cathode substrate, a nickel substrate, or a cathode substrate obtained by forming an active cathode by coating the nickel substrate can be used. Examples of the shape of the cathode substrate include an expanded mesh and a porous expanded mesh in addition to a plate shape.

The cathode material includes porous nickel having a large surface area, a Ni-Mo-based material, and the like. Besides, the cathode material includes Raney nickel-based materials, such as Ni-Al, Ni-Zn, and Ni-Co-Zn; sulfidebased materials, such as Ni-S; and hydrogen absorbing alloy-based materials, such as Ti₂Ni; and the like. The catalyst preferably has characteristics of low hydrogen overpotential, high stability against short-circuit, high poisoning resistance, and the like. As other catalysts, metals, such as platinum, palladium, ruthenium, and iridium, and oxides thereof are preferable.

As the electrolysis separator, asbestos, nonwoven fabric, an ion-exchange membrane, a porous polymer membrane, and a composite membrane of an inorganic substance and an organic polymer, and the like can be used. Specifically, an ion-permeable separator such that organic fiber cloth is incorporated in a mixture of a hydrophilic inorganic material, such as a calcium phosphate compound and calcium fluoride, and an organic binding material, such as polysulfone, polypropylene, and polyvinylidene fluoride, can be used. In addition, an ion-permeable separator such that stretched organic fiber cloth is incorporated in a filmforming mixture of an inorganic hydrophilic substance in the form of particles, such as oxides and hydroxides of antimony and zirconium, and an organic binder, such as a fluorocarbon polymer, polysulfone, polypropylene, polyvinyl chloride, and polyvinyl butyral, can be used.

The use of the alkaline water electrolysis cell using the electrolysis electrode of the present embodiment as a constituent element makes it possible to electrolyze a high-concentration aqueous alkali solution. The aqueous alkali solution that is used as the electrolyte is preferably an aqueous solution of an alkali metal hydroxide, such as sodium hydroxide (NaOH) or potassium hydroxide (KOH). The concentration of the aqueous alkali solution is preferably 1.5 to 40% by mass. In addition, the concentration of the aqueous alkali solution is preferably 15 to 40% by mass because the electric conductivity is large and the electric power consumption can be suppressed. Further, when the costs, the corrosiveness, the viscosity, the operability, and the like are taken into consideration, the concentration of the aqueous alkali solution is preferably 20 to 30% by mass.

### Examples

Hereinafter, the present invention will specifically be described based on Examples, but the present invention is not limited to these Examples. Note that "parts" and "%" in Examples and Comparative Examples are each on a mass basis unless otherwise noted.

### <Production of Anode Substrate>

A nickel expanded mesh was subjected to a blast treatment with alumina particles and then immersed in 20% by mass hydrochloric acid to subject the nickel expanded mesh to an etching treatment near the boiling point for 3 minutes. Subsequently, the nickel expanded mesh was baked at 500°C for 30 minutes to obtain an anode substrate having a nickel oxide (NiOx) layer formed on the surface thereof.

### <Production of Electrolysis Anode>

### (Example 1)

Nickel nitrate (Ni(NiO₃)₂·6H₂O), cobalt nitrate (Co(NO₃)₂·6H₂O), and an iridium hydroxyacetyl chloride complex (IrHAC) were dissolved in pure water to obtain a catalyst precursor composition (coating solution) in which the mass ratio of nickel (Ni) :cobalt (Co) :iridium (Ir) was Ni:Co:Ir = 27:53:20. The obtained coating solution was coated on the surface of the nickel oxide layer of the above-described anode substrate such that the amount of metals per coating was 1.5 g/m². Thereafter, pyrolysis was conducted, in which a thermal treatment (baking) was performed at 350°C for 10 minutes in an air-circulating electric furnace. The treatment from the coating of the coating solution to the pyrolysis was repeated 4 times to obtain a primary baked product. The primary baked product thus obtained was subjected to an alkali treatment of immersing the primary baked product for 3 hours in a 6% aqueous sodium hydroxide solution whose temperature was controlled to 30°C. The primary baked product after the alkali treatment was rinsed with pure water and dried with an air blow gun, then placed in an air-circulating electric furnace, and subjected to post-bake of performing a thermal treatment at 500°C for 60 minutes. Thereby, an alkaline water electrolysis anode (electrolysis electrode) was obtained, wherein the alkaline water electrolysis anode was such that a catalyst layer containing a nickel cobalt spinel oxide and an iridium oxide was formed on the surface of the anode substrate. The amount of metals in the formed catalyst layer was 6 g/m².

### (Examples 2 to 5 and Comparative Examples 1 to 5)

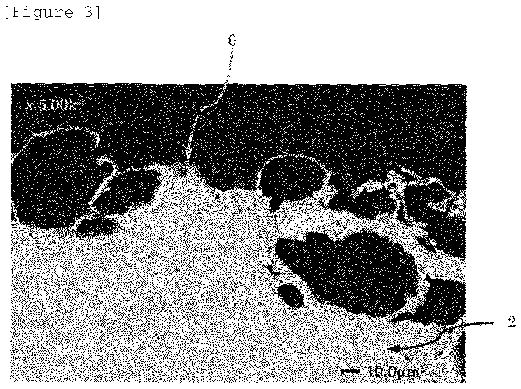

An alkaline water electrolysis anode (electrolysis electrode) was obtained in the same manner as in Example 1, described above, except that the conditions shown in Table 1 were employed. Note that in Comparative Examples 1 to 5, the primary baked product as produced was used as the anode. SEM images of sections of the electrolysis electrodes produced in Example 3 and Comparative Example 1 were shown in Figures 2 and 3, respectively.

**Table 1: Production of electrolysis electrode**

| | | Catalyst precursor composition | | | | Baking temperature (°C) | Alkali treatment | Post-bake | |
|---|---|---|---|---|---|---|---|---|---|
| | | Compound | Composition (%) of metal elements | | | | | Temperature (°C) | Time (min) |
| | | | Ni | Co | Ir | | | | |
| | 1 | Ni(NO₃)₂·6H₂O | 27 | 53 | 20 | 350 | Performed | 500 | 60 |
| | | Co(NO₃)₂·6H₂O | | | | | | | |
| | | IrHAC | | | | | | | |
| | 2 | Ni(NO₃)₂·6H₂O | 25 | 50 | 25 | 350 | Performed | 500 | 60 |
| | | Co(NO₃)₂·6H₂O | | | | | | | |
| | | IrHAC | | | | | | | |
| Examples | 3 | Ni(NO₃)₂·6H₂O | 22 | 44 | 33 | 350 | Performed | 500 | 60 |
| | | Co(NO₃)₂·6H₂O | | | | | | | |
| | | IrHAC | | | | | | | |
| | 4 | Ni(NO₃)₂·6H₂O | 17 | 33 | 50 | 350 | Performed | 500 | 60 |
| | | Co(NO₃)₂·6H₂O | | | | | | | |
| | | IrHAC | | | | | | | |
| | 5 | Ni(NO₃)₂·6H₂O | 22 | 44 | 33 | 350 | Not performed | 500 | 60 |
| | | Co(NO₃)₂·6H₂O | | | | | | | |
| | | Ir-acetate | | | | | | | |
| | 1 | Ni(NO₃)₂·6H₂O | 27 | 53 | 20 | 350 | Not performed | - | - |
| | | Co(NO₃)₂·6H₂O | | | | | | | |
| | | Ir-nitrate | | | | | | | |
| | 2 | Ni(NO₃)₂·6H₂O | 27 | 53 | 20 | 350 | Performed | - | - |
| | | Co(NO₃)₂·6H₂O | | | | | | | |
| | | IrHAC | | | | | | | |
| | 3 | Ni(NO₃)₂·6H₂O | 25 | 50 | 25 | 350 | Performed | - | - |
| Comparative examples | | Co(NO₃)₂·6H₂O | | | | | | | |
| | | IrHAC | | | | | | | |
| | 4 | Ni(NO₃)₂·6H₂O | 22 | 44 | 33 | 350 | Performed | - | - |
| | | Co(NO₃)₂·6H₂O | | | | | | | |
| | | IrHAC | | | | | | | |
| | 5 | Ni(NO₃)₂·6H₂O | 17 | 33 | 50 | 350 | Performed | - | - |
| | | Co(NO₃)₂·6H₂O | | | | | | | |
| | | IrHAC | | | | | | | |

### <Evaluations>

### (Measurement of Oxygen Overpotential)

The oxygen overpotential (mV) was measured for the produced electrolysis electrodes using a 30% aqueous potassium hydroxide solution under conditions of 80°C and a current density of 10 kA/m². The results are shown in Table 2.

### (Measurement of Residual Amount of Ir in Catalyst Layer)

The fluorescence X-ray intensity of iridium (Ir) in the catalyst layer was measured for the electrolysis electrodes before and after the measurement of the oxygen overpotential using a fluorescence X-ray analyzer. Then, the residual amount (%) of iridium (Ir) based on the amount of iridium (Ir) before the measurement of the oxygen overpotential was calculated from the ratio of the measured fluorescence X-ray intensities of iridium (Ir). The results are shown in Table 2.

**Table 2: Evaluations of electrolysis electrode**

| | | Oxygen overpotential (10kA/m²) (mV) | Residual amount (%) of Ir in catalyst layer |
|---|---|---|---|
| Examples | 1 | 250 | 100 |
| | 2 | 247 | 100 |
| | 3 | 231 | 100 |
| | 4 | 225 | 100 |
| | 5 | 242 | 100 |
| Comparative Examples | 1 | 246 | 91 |
| | 2 | 221 | 84 |
| | 3 | 206 | 83 |
| | 4 | 184 | 80 |
| | 5 | 178 | 61 |

### <Production and Evaluations of Electrolysis Anode Having Intermediate Layer>

### (Example 6)

Nickel acetate tetrahydrate (Ni(CH₃COO)₂·4H₂O) was dissolved in pure water to obtain an aqueous solution in which the concentration of nickel acetate was 0.57 mol/L. In addition, a nickel expanded mesh was subjected to a blast treatment with alumina particles and then immersed in 20% by mass hydrochloric acid to subject the nickel expanded mesh to an etching treatment near the boiling point for 3 minutes, and thus an anode substrate was obtained. The aqueous solution of nickel acetate was coated on the surface of the obtained anode substrate with a brush and then dried at 60°C for 10 minutes. Subsequently, the anode substrate was subjected to a thermal treatment at 500°C for 10 minutes in the air atmosphere. The operation from the coating of the aqueous solution of nickel acetate to the thermal treatment was repeated 5 times to obtain an anode substrate having an intermediate layer on the surface thereof. Then, an alkaline water electrolysis anode (electrolysis electrode) having a catalyst layer on the surface of the anode substrate with the intermediate layer interposed between the catalyst layer and the anode substrate was obtained in the same manner as in Example 3, described above, except that the above-described anode substrate having the intermediate layer formed on the surface thereof was used.

The oxygen overpotential (current density: 10 kA/m²) of the obtained electrolysis electrode was 240 mV. The residual amount of iridium (Ir) in the catalyst layer of the electrolysis electrode after the measurement of the oxygen overpotential was 100%, and therefore it was ascertained that iridium (Ir) was substantially free from being consumed, which was the same as in the electrolysis electrodes of Examples 1 to 5.

### Industrial Applicability

The electrolysis electrode of the present invention is suitable as an alkaline water electrolysis anode for example.

### Reference Signs List

- 2: Electrically conductive substrate
- 4: Nickel oxide layer
- 6: Catalyst layer
- 10: Electrolysis electrode

## Claims

1. A method for producing an electrolysis electrode, comprising:
a step of directly or indirectly coating a catalyst precursor composition comprising a nickel component, a cobalt component and an iridium component on a surface of an electrically conductive substrate, at least the surface thereof being composed of nickel or a nickel base alloy;
a step of obtaining a primary baked product by thermal treating the electrically conductive substrate coated with the catalyst precursor composition at 320 to 600°C; and
a step of forming a catalyst layer containing a nickel cobalt spinel oxide and an iridium oxide directly or indirectly on the surface of the electrically conductive substrate by thermal treating the primary baked product at 350 to 600°C, wherein
the iridium component is an iridium compound comprising a carboxy group, and
in the catalyst precursor composition, the content of nickel (Ni) is 10 to 35% by mass, the content of cobalt (Co) is 25 to 55% by mass, and the content of iridium (Ir) is 15 to 55% by mass, provided that Ni + Co + Ir = 100% by mass.

2. The method for producing an electrolysis electrode according to claim 1, wherein a mass ratio ((Ni + Co)/Ir) of the total content of nickel (Ni) and cobalt (Co) to the content of iridium (Ir) in the catalyst precursor composition is 0.9 to 4.1.

3. The method for producing an electrolysis electrode according to claim 1 or 2, wherein the iridium compound is at least any one of an iridium hydroxyacetyl chloride complex and iridium acetate.

4. The method for producing an electrolysis electrode according to any one of claims 1 to 3, further comprising a step of bringing the primary baked product into contact with an alkali component to treat the primary baked product.

5. An electrolysis electrode produced by the method according to any one of claims 1 to 4.

6. The electrolysis electrode according to claim 5, wherein the electrolysis electrode is an alkaline water electrolysis electrode.
